(19) Europäisches Patentamt

European Patent Office

Office européen des brevets

(11) **EP 1 591 784 A1**

(12) **EUROPEAN PATENT APPLICATION**
published in accordance with Art. 158(3) EPC

(43) Date of publication:
**02.11.2005 Bulletin 2005/44**

(51) Int Cl.7: **G01N 30/48**, G01N 30/02

(21) Application number: **04705899.5**

(22) Date of filing: **28.01.2004**

(86) International application number:
**PCT/JP2004/000766**

(87) International publication number:
**WO 2004/070378 (19.08.2004 Gazette 2004/34)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.02.2003 JP 2003026058**

(71) Applicant: **Organo Corporation Tokyo 136-8631 (JP)**

(72) Inventors:
• **YAMANAKA, Koji, c/o ORGANO CORPORATION kotoku, Tokyo 1368631 (JP)**
• **INOUE, Hiroshi, c/o ORGANO CORPORATION kotoku, Tokyo 1368631 (JP)**
• **YOSHIDA, Akiko, c/o ORGANO CORPORATION kotoku, Tokyo 1368631 (JP)**
• **FUJITA, Masashi, c/o ORGANO CORPORATION kotoku, Tokyo 1368631 (JP)**

(74) Representative: **Herzog, Martin Kahlhöfer . Neumann . Herzog . Fiesser, Karlstrasse 76 40210 Düsseldorf (DE)**

(54) **COLUMN FOR ION CHROMATOGRAPH, SUPPRESSOR AND ION CHROMATOGRAPH**

(57)     A separation column for ion chromatograph, which is packed with an organic porous ion exchanger having a three-dimensionally network structure which has a continuous pore structure comprising macropores connected with each other and, being present in the wall between them, a mesopore having a radius of 0.01 to 50 μm, has a total pore volume of 1 to 50 ml/g, exhibits a value obtained by dividing the half width of the main peak of the pore distribution curve thereof by the radius of the peak top of the main peak of 0.5 or less, and has ion exchange groups introduced so that the exchanger has an ion-exchange capacity of 0.1 to 5000 μg equivalent/g-dry organic porous ion exchanger. The separation column exhibits high performance capability especially for the separation and concentration of low molecular weight ions, and thus can be used for passing a sample solution through it with a reduced pressure while retaining a high capability for ion resolution.

Fig 3

**Description**

The present invention relates to a column for ion chromatographic instrument used in the field of environmental water quality analysis to quantitatively determine ionic substances in power plant water, precision parts washing water in semiconductor manufacturing, food processing water, and the like, to a suppressor, and to an ion chromatographic instrument.

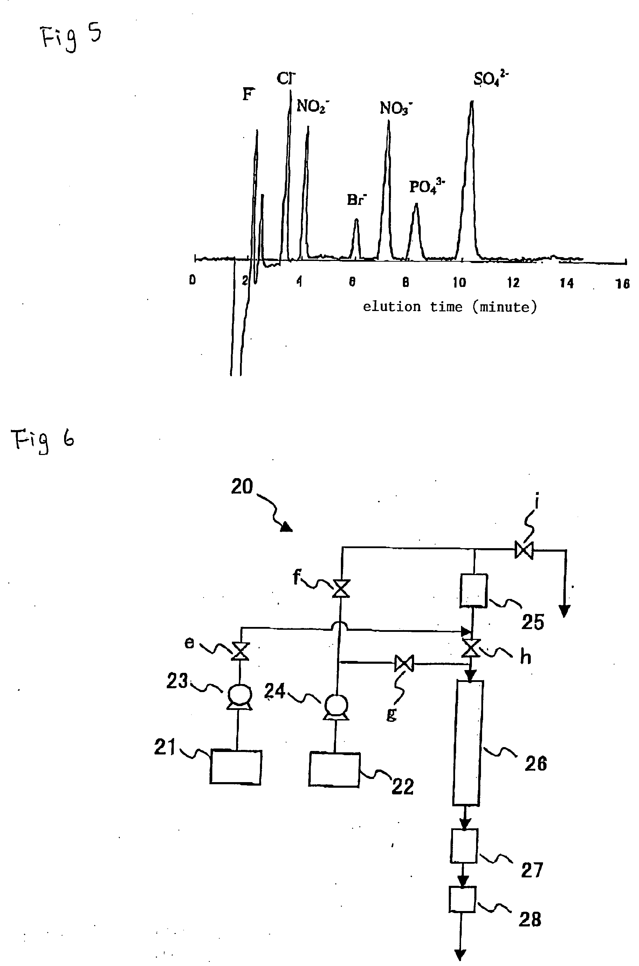

An ion chromatographic instrument is used as one equipment combining various components. Figure 6 schematically shows an example of a conventional ion chromatographic instrument. The ion chromatographic instrument 20 have a sample storage tank 21, a sample pump 23, an eluant tank 22, an eluant pump 24, a concentration column 25, a separation column 26, a suppressor 27, a detector 28, valves e, f, g, h, and i, a tube to connect these components, and other components which are not shown in the drawing such as a guard column, valve, deaerator, thermostat, data processor, and the like. To quantitatively analyze ions in a sample, the valves e and i are opened and the valves f and h are closed to send the sample from the sample storage 21 to the sample pump 23. The sample is then fed upward through the concentration column 25 to cause the ion exchanger packed in the column to adsorb ions to be measured. The sample solution after adsorption of ions is discharged from the top side of the concentration column. This operation is continued until the sample solution has been passed through the column in an amount sufficient to cause the concentration of the ions to be measured and adsorbed in the column to reach a predetermined concentration magnification. Simultaneously with this operation, the valve g is opened to feed the eluant by the eluant pump 24 from the eluant tank 22 to the separation column 26, the suppressor 27, and the detector 28, whereby the separation column 26 is stabilized by the eluant in preparation for the measurement of ions. Upon completion of feeding the sample solution to the concentration column 25, the sample pump 23 is stopped, the valves e, g, and i are closed, and the valves f and h are opened to send the eluant from the top side of the concentration column 25, whereby the ions to be measured which have been adsorbed in the concentration column 25 are eluted by the eluant. The eluate containing the ions to be measured is introduced into the separation column 26, wherein the ions to be measured are developed and separated into various ions in the separation column. The eluate containing ions to be measured is caused to pass through the suppressor 27 to increase the S/N ratio and then is introduced into the detector 28 to quantitatively detect various ions.

Since the separation column, concentration column, and suppressor composing the ion chromatographic instrument respectively have their own objectives of installation and are expected to exhibit different functions, these components are endowed with performance according to their objectives.

The separation column separates the ions to be measured into each ion. The column usually has an internal diameter of 2 to 5 mm and a length of 200 to 300 mm, and is packed with a particulate ion exchanger with a diameter of about 3 to 20 μm. The ion exchange capacity of the ion exchanger is about 10 to 30 μg equivalent/ml and the ion exchange capacity of the entire column is about 10 to 300 μg equivalent. As required, a guard column is installed in front of the separation column to protect the expensive separation column from damage due to intrusion of foreign matter and the like.

In the analysis of a small amount of ions, e.g. an amount from about several μg/l to several ng/l, the concentration column is provided before the separation column to for concentrating the objective ions to be measured to a concentration about several hundred times to several thousand times of the original concentration. The concentration column usually has an internal diameter of 2 to 5 mm and a length of 10 to 50 mm, and is packed with a particulate ion exchanger with a diameter of about 30 μm. The ion exchange capacity of the ion exchanger is about 10 to 30 μg equivalent/ml and the ion exchange capacity of the entire column is about 1 to 10 μg equivalent.

The suppressor is provided after the separation column and is used to improve the S/N ratio of the measurement in the detector. Because an electric conductivity meter is usually used as the detector in an ion chromatographic instrument, to improve the S/N ratio during the detection, not only the conductance of eluted components which are components other than the objective ions to be measured in the eluate is decreased, but also the objective ions to be measured are converted into ions with a higher conductance. An ion exchanger corresponding to the objective ions to be determined is used as the suppressor. Specifically, a cation exchanger is used when the objective ion to be determined is anion and an anion exchanger is used when the objective ion to be determined is a cation. For instance, when the objective ion to be determined is an anion (e.g. a chloride ion) and a sodium hydroxide solution is used as an eluant, an H-form cation exchanger is used as the suppressor. The cation exchanger exchanges the sodium ion in the eluate for a hydrogen ion and generates water with a low conductance and exchanges the counter ion (sodium ion) of the eluted objective ion to be determined for the hydrogen ion, whereby converting sodium chloride dissolved in the eluate into hydrochloric acid with a higher conductance. The S/N ratio can be increased in this manner.

As the ion exchanger used as the suppressor, there are a discontinuous, regenerative type using a particulate ion exchanger and a continuous, regenerative type using an ion exchange membrane. There are two types of the continuous, regenerative type ion exchanger. One is a type in which the ion exchanger is continuously regenerated by causing the effluent from the separation column to flow inside a hollow fiber membrane, while causing a regenerant to flow outside the hollow fiber membrane. The other is a type having two sheets of ion exchange membranes arranged side by side and electrodes installed outside the membranes, wherein the ion exchanger is continuously regenerated by causing the effluent from the separation column to flow in between the membranes, while applying a direct current voltage between the membranes. The continuous electric regeneration type, which requires neither replacement of the suppressor column nor regeneration using a regenerant, is advantageous from the viewpoint of the simple operation, low analytical cost, and a high analytical efficiency.

However, the separation column of a conventional ion chromatographic instrument must be provided with a large number of theoretical plates to achieve excellent resolution, giving rise to the necessity of increasing the amount of the particulate ion exchanger packed in the column. This increases the pressure of the influent fluid and, therefore, requires expensive equipment and parts such as pumps, columns, pipes, and valves with special specifications for high pressure feeding. If the pressure is reduced, the flow rate decreases and it takes a long time to carry out the analysis. In addition, special equipment and skills are required to uniformly pack the column with ion exchanger particles with a diameter of the $\mu$m order.

In the continuous, regenerative type suppressor using ion exchange membranes, when the effluent from the separation column flows through the space between the ion exchange membranes, the effluent at a certain point of time may be mixed with the effluent that has been discharged at an earlier point of time, whereby ions once separated in the separation column are mixed, giving rise to low resolution performance. To solve this problem, a method of providing a mesh made of a material inert to the objective ion to be determined, for instance, a polyethylene mesh, between the two sheets of ion exchange membranes to narrow the flow passage between the ion exchange membranes has been conventionally employed. However, because the size of the mesh ranges from several tens to several hundreds micron meters, and the passage between the mesh and the ion exchange membrane is wider than the clearance of the separation column, which is on the order of several micron meters, it is impossible to completely prevent the decrease in the resolution capability.

Use of a porous medium as a packing material has been proposed as a method to solve the problem of the fluid pressure rise in the separation column. Japanese Patent Application No. 2002-350412 (Patent Document 1) discloses multi-dimensional high performance liquid chromatography using as a packing material an inorganic porous medium of which the major component is silica. This multi-dimensional high performance liquid chromatography allows fluid processing at a high speed. A separation unit including a monolith adsorbent made of a porous molded material is disclosed in Published Japanese translation of PCT Application No. 2002-536651 (Patent Document 2). However, the inventions disclosed in these patent applications deal with nonionic aromatic compounds to be determined and employ a UV detector as the detecting instrument.

As the ion chromatography using a porous medium, Published Japanese translation of PCT Application No. 2002-529714 (Patent Document 3) discloses a selective adsorber used as a stationary phase in elution chromatography. This adsorber is a porous separating medium made from an organic resin core and a shell having a large number of covalently bonded non-aromatic ampholytic groups on the surface. It is possible to analyze biopolymers such as proteins using this ion chromatography under mild conditions in which the substances to be analyzed are not denatured during the ion exchange chromatographic separation. The inventors of this PCT application paid attention to ampholytic ion groups of proteins to be analyzed and introduced the ampholytic ion exchange group into the packing material, whereby it has become possible to analyze the proteins. A UV detector is used as the detecting instrument.

Japanese Patent Application Laid-open No. 2002-306976 (Patent Document 4) discloses a porous ion exchanger having a three-dimensional network structure and an electrodeionization water manufacturing apparatus using this a porous ion exchanger, wherein the ion exchanger has a continuous pore structure comprising macropores and mesopores (the macropores being interconnected forming mesopores with a radius of 1 to 1,000 $\mu$m in the interconnected parts), and a total pore volume of 1 to 50 ml/g, uniformly distributed ion exchange groups, and an ion exchange capacity of 0.5 mg-equivalent/g or more on a dry basis, and an electrodeionization water production apparatus using the porous ion exchanger.

(Patent Document 1) Japanese Patent Application Laid-open No. 2002-350412 (Claim 1, paragraphs [0005] and [0006])

(Patent Document 2) Published Japanese Translation of PCT international publication for Patent Application No. 2002-536651 (Claim 1)

(Patent Document 3) Published Japanese Translation of PCT international publication for Patent Application No. 2002-529714 (Claim 2, paragraph [0010])

(Patent Document 4) Japanese Patent Application Laid-open No. 2002-306976 (Claim 1)

However, since the analytical method usually differs according to the object to be analyzed in the quantitative analysis using chromatography, it is necessary to select an optimum separation column, detector, pretreatment or posttreatment method, and the like commensurate with the object to be analyzed. An analytical method used for a specific object to be analyzed cannot necessarily be used for other objects to be analyzed. It is uncertain whether a porous medium disclosed in the Patent Documents 1-3 can be used for the chromatography analysis of low molecular weight ionic substances, because these Patent Documents do not disclose quantitative determination of low molecular weight ionic substances. The separation mechanism of low molecular weight ionic substances in the separation column is quite different from that of nonionic aromatic compound and proteins. In the analysis of nonionic aromatic compounds and proteins, a UV detector with a high sensitivity can be used without concentrating the samples, whereas in the analysis of low molecular weight ionic substances the samples must be concentrated because an electric conductivity meter is used as a detector. In addition, since the eluant affects the detector's sensitivity in the analysis of low molecular weight ionic substances, a suppressor to increase the S/N ratio is required. Therefore, the analytical method of low molecular weight ionic substances is quite different from that of other substances.

Since the separation column, concentration column, and suppressor have their own respective objects of installation and are expected to exhibits different functions as mentioned above, the performance requirements for these components are not necessarily satisfied by simply introducing ion exchange groups into the organic porous material. Patent Documents 1-3 do not disclose a suppressor for ion chromatography and Patent Documents 4 does not disclose applicability of a porous ion exchanger to ion chromatography.

Therefore, an object of the present invention is to provide a separation column or concentration column for ion chromatographic instrument that can exhibit high performance of separating or concentrating particularly low molecular weight ions and can allow a low pressure flow of fluid while maintaining the ion resolution capability, a suppressor that does not decrease the resolution capability when the eluate containing the objective ions to be analyzed and flowing out from the separation column passes through the suppressor, and an ion chromatographic instrument equipped with the separation column and the concentrator column.

In view of this situation, the inventors of the present inventions have conducted extensive studies and found that an organic porous ion exchanger used in a column or the like can exhibit different performance by modifying certain factors of the ion exchanger, that there are four factors affecting the performance of the ion exchanger used in the column or the like: (i) the radius of mesopores formed by interconnected macropores, (ii) the ion exchange capacity, (iii) the value obtained by dividing the half width of the main peak in the pore distribution curve by the peak top radius of the main peak, and (iv) the total pore volume, and that the organic porous ion exchanger can be appropriately modified by controlling these four factors to so as to tailer these factors for respective applications in the concentration column, separation column, and suppressor of the ion chromatographic instrument. This finding has led to the completion of the present inventions.

Specifically, the present invention (1) provides a separation column for an ion chromatographic instrument packed with an organic porous ion exchanger having a three-dimensional network structure, which has a continuous pore structure comprising macropores and mesopores, the macropores being interconnected each other forming mesopores with a radius of 0.01 to 50 µm in the interconnected parts, having a total pore volume of 1 to 50 ml/g, and having pore distribution curve characteristics wherein the value obtained by dividing the half-width of the pore distribution curve at the main peak by the radius at the peak top of the main peak is 0.5 or less, the organic porous ion-exchanger having the ion-exchange groups introduced therein to achieve an ion-exchange capacity of 0.1 to 5,000 µg equivalent/g dried organic porous ion exchanger.

The present invention (2) provides a concentration column for an ion chromatographic instrument packed with an organic porous ion exchanger having a three-dimensional network structure, which has a continuous pore structure comprising macropores and mesopores, the macropores being interconnected each other forming mesopores with a radius of 0.1 to 100 µm in the interconnected parts and the organic porous ion-exchanger having the ion exchange groups introduced therein to achieve an ion exchange capacity of 1.0 µg equivalent/g dried organic porous ion exchanger or more.

The present invention (3) provides a suppressor for an ion chromatographic instrument packed with an organic porous ion exchanger having a three-dimensional network structure, which has a continuous pore structure comprising macropores and mesopores, the macropores being interconnected each other forming mesopores with a radius of 0.01 to 50 µm in the interconnected parts, having pore distribution curve characteristics wherein the value obtained by dividing the half-width of the pore distribution curve at the main peak by the radius at the peak top of the main peak is 0.5 or less, the organic porous ion exchanger having the ion exchange groups introduced therein to achieve an ion exchange capacity of 1.0 µg equivalent/g dried organic porous ion exchanger or more.

The present invention (4) provides an ion chromatographic instrument comprising at least the above separation column and concentration column, wherein the radius of mesopores of the organic porous ion exchanger packed in the separation column is smaller than the radius of mesopores of the organic porous ion exchanger packed in the concentration column.

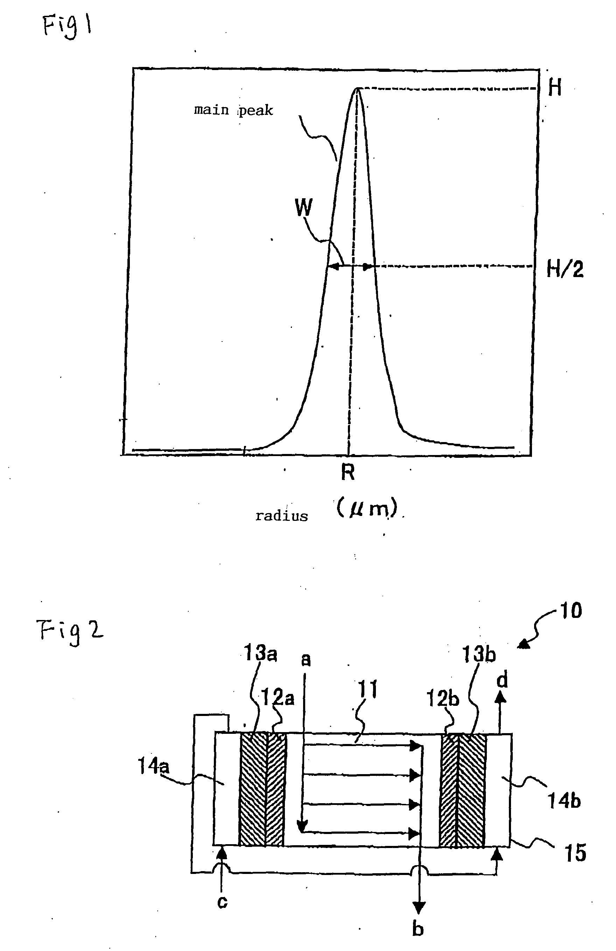

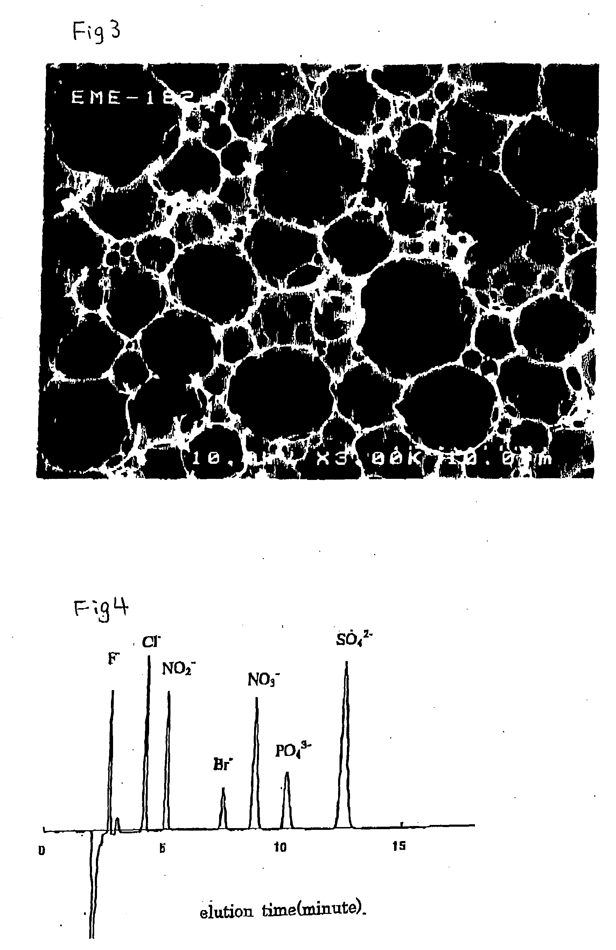

Figure 1 is an example of the pore distribution curve of the organic porous ion exchanger determined using the mercury porosimetry. Figure 2 is a flow diagram of a continuous electric regeneration type suppressor in one embodiment of the present invention. Figure 3 is an SEM photograph of the organic porous material obtained in Example 1. Figure 4 is a chromatogram obtained in Example 4. Figure 5 is a chromatogram obtained in Comparative Example 2. Figure 6 is a schematic diagram of an ion chromatographic instrument.

The basic structure of the organic porous ion exchanger used in the separation column for the ion chromatography (hereinafter referred to simply as "separation column"), the concentration column for the ion chromatography (hereinafter referred to simply as "concentration column"), and the suppressor for the ion chromatography (hereinafter referred to simply as "suppressor") used in the embodiments of the present invention is a continuous porous structure comprising macropores and mesopores, the macropores being interconnected with each other forming mesopores in the interconnected parts, walls as described in Japanese Patent Application Laid-open No. 2002-306976. Specifically, the continuous pore structure usually includes a structure in which macropores are overlapped each other. The overlapped section has mesopores functioning as common openings of the macropores, thereby forming an open pore structure. In the open pore structure, pores formed from the macropores and mesopores function as flow paths for fluids. Macropores have 1 to 12 overlapped sections each one, major part of macropores have 3 to 10 overlapped sections each one, thereby forming a three-dimensional network structure. Ion exchange groups are introduced in the continuous pore structure. The material for the matrix forming the continuous pore structure is an organic polymer having a crosslinking structure. The polymer preferably contains crosslinkage in the amount of 5 mol% or more of the total amount of the polymer. If the content of crosslinkage is less than 5 mol%, the mechanical strength of the polymer may be insufficient. An organic porous ion exchanger tailored for any particular the application can be obtained by controlling the afore mentioned four factors of the organic porous ion exchanger.

The four factors of the organic porous ion exchanger used for the present invention are (i) the radius of the mesopores formed by interconnected macropores, (ii) the ion exchange capacity, (iii) the value obtained by dividing the half-width of the main peak by the top peak radius of the main peak in the pore distribution curve, and (iv) the total pore volume. The value obtained by dividing the half-width of the main peak by the top peak radius of the main peak in the pore distribution curve will now be explained referring to Figure 1. As shown in Figure 1, the pore distribution curve of a dry organic porous ion exchanger drawn by the mercury porosimetry has one main peak. Assuming that the height of the main peak as H, the radius as R, and the width of the peak at one half of the peak height (H/2) of the main peak as W, the above value can be obtained by dividing the half-width W of the main peak by the top peak radius R of the main peak (hereinafter referred to as W/R). The smaller the W/R value, the more homogeneous are the macropores and mesopores forming the continuous pore structure. In addition, since such a structure contains no macrovoids which are structural defective sites, the resultant product has increased physical strength and improved durability against swelling and shrinkage.

Because the separation column of the present invention is to separate objective ions to be analyzed into each ion, the column must have high ion resolution capability. Moreover, to increase the theoretical plate number, the height of the separation column, which has the largest effects on the pressure increase during flow of a fluid among various components of the ion chromatographic instrument, must be increased. Therefore, the organic porous ion exchanger should have such characteristic as ensure a minimum of pressure increase due to flow of a fluid and the time for the analysis as short as possible.

The organic porous ion exchanger used for the separation column should have a continuous pore structure in which the mesopores have a radius of 0.01 to 50 µm, preferably 0.1 to 10 µm, and more preferably 0.5 to 5 µm and the W/R is 0.5 or less, preferably 0.45 or less. The resolving capability is markedly improved when the continuous pore structure has small mesopore radii and a small W/R value. If the radii of mesopores are smaller than 0.01µm, a fluid is difficult to pass through due to a pressure rise; if these radii are larger than 50 µm, the resolution capability decreases. If the W/R value is more than 0.5, the resolution capability decreases. The ion exchange capacity is 0.1 to 5,000 µg equivalent/g dried organic porous ion exchanger, preferably 1 to 1,000 µg equivalent/g dried organic porous ion exchanger, and more preferably 10 to 500 µg equivalent/g dried organic porous ion exchanger. The ion exchange capacity affects the resolving capability and the analysis time which are in antagonistic relationship to each other. When the ion exchange capacity is small, the analysis time is short, but the resolving capability is small. Specifically, when the ion exchange capacity is large, the resolving capability is high, but the analysis time is long. Therefore, the ion exchange capacity is determined by taking the balance of the two factors into consideration. In addition, the organic porous ion exchanger should have a total pore volume of 1 to 50 ml/g, preferably 2 to 30 ml/g, and more preferably 5 to 20 ml/g. It is possible to decrease the pressure during passage of fluids by increasing the total pore volume. The total pore volume less than 1 ml/g is undesirable due to the pressure rise during fluid passage, and the total pore volume more than 50 ml/g is undesirable because the strength of the organic porous ion exchanger is markedly reduced. A separation column exhibiting excellent separation performance can be constituted by using the organic porous ion exchanger having foregoing.

The organic porous ion exchanger used for the separation column may be of the type having noncontinuous micropores with an average pore size of 5 to 800 nm formed in the interconnected parts walls of the continuous pore structure formed by interconnection of mesopores. This type of separation column can synergistically utilize the effect of separation due to the difference in the size in addition to the effect of ion selectivity of the target ion to be analyzed. For example, the separation column can exhibit outstanding resolving capability in quantitative separation and determination of substances with proximate ion selectivity, for example a mixture of a biological-related substance with an ion-dissociable group such as an amino acid or protein and inorganic low molecular weight ions.

Because the concentration column of the present invention is used to concentrate a small amount of objective ions in the sample to be analyzed to a concentration about several hundred times to several thousand times of the original concentration of the ions before introducing them into the separation column, the concentration column is provided before the separation column. To satisfy the requirement for introducing the objective ions to be analyzed into the separation column at a point of time as close as possible to the time of introducing them into the separation column to increase the resolution capability and the requirement for allowing as much a sample fluid as possible to flow, the concentration column must allow a high flow rate.

The organic porous ion exchanger used for the concentration column should have a continuous pore structure in which the mesopores have radii of 0.1 to 100 µm, preferably 0.5 to 50 µm, and more preferably 1 to 20 µm. The flow rate can be increased by increasing the mesopore radii. The ion exchange capacity should be 1.0 µg equivalent/g dry organic porous ion exchanger or more, and preferably 50 to 5,000 µg equivalent/g of dry organic porous ion exchanger. The bandwidth of each objective ion to be analyzed can be narrowed by increasing the ion exchange capacity. Therefore, it is possible to increase the resolution capability by reducing the bandwidth of each objective ion to be analyzed when the adsorbed ion is eluted and introduced into the separation column using an eluant after completion of the adsorption operation of the concentration column. If the ion exchange capacity of the organic porous ion exchanger is less than 1.0 µg-equivalent/g on a dry organic porous ion exchanger, the ion bandwidth produced by adsorption is broad, resulting in lowered resolution capability. A concentration column exhibiting excellent concentration performance can be obtained by using the organic porous ion exchanger having foregoing properties.

In conventional separation columns and the concentration columns, special equipment and skills were necessary to disperse a packing material in the form of fine particles with sizes in the order of micron meters in a dispersion medium and to form a uniform packed layer by causing the resultant slurry to pass through the column. However, since the separation column and concentration column of the present invention can be prepared by packing the above-described organic porous ion exchanger cut in a shape capable of being inserted in a given container or by manufacturing the organic porous ion exchanger in the container, the ion exchanger can be packed quite easily and uniformly as compared with the case of preparing columns by packing conventional fine particles. As the method for manufacturing the organic porous ion exchanger in the container, a method of forming a W/O (water in oil) emulsion in the container or a method of filling an emulsion prepared in another container and then transferring the resultant emulsion to the separation or concentration container (column), and then introducing the ion exchange groups after the polymerization can be given. Although there are no specific limitations to the shape of the container, a cylinder, circular disk, capillary, and the like are preferable to allow uniform flow of fluids.

To increase the S/N ratio during detection, the suppressor of the present invention must be able to decrease the conductance of the eluted components and to prevent ions once separated by the separation column from being mixed again.

The organic porous ion exchanger used for the suppressor should have a continuous pore structure in which the mesopores have radii of 0.01 to 50 µm, preferably 0.1 to 10 µm, and more preferably 0.5 to 5 µm and the W/R is 0.5 or less, and preferably 0.45 or less in the suppressor, the effluent discharged from the separation column at a certain point of time is prevented from being mixed with the effluent that has been discharged at an earlier point of time by narrowing the flow passage and forming uniform mesopores in the organic porous ion exchanger of the suppressor. Separation once performed in the separation column can be preserved in this manner. If the radii of the mesopores are less than 0.01µm, the pressure is increased during flow of fluid; if more than 50 µm, ions once separated in the separation column may be easily mixed. If the W/R value is more than 0.5, ions once separated in the separation column may be easily mixed. The ion exchange capacity is 1.0 µg equivalent/g dry organic porous ion exchanger or more, and preferably 50 to 5,000 µg equivalent/g of dry organic porous ion exchanger. Counter ions in the eluate can be sufficiently converted into protons or hydroxide ions and the conductance of the eluate components can be lowered by increasing the ion exchange capacity. If the ion exchange capacity of the organic porous ion exchanger is less than 1.0µg equivalent/g on a dry organic porous ion exchanger, conversion of counter ions in the eluate to protons or hydroxide ions is insufficient, resulting in a decrease in the S/N ratio.

As the suppressor of the present invention, a column packed with the organic porous ion exchanger may be used as is or a continuous electric regeneration type suppressor may be used. Any type of continuous electric regeneration type suppressor, including a transverse-mounted pillar, cylinder, and flat plate, can be used without any specific limitations, so long as the suppressor can decrease the conductance of the elution components in the effluent from the separation column, increase the conductance of the objective ion components to be analyzed in the effluent, and increase the S/N ratio. Of these, a transverse-mounted pillar-type (shown in Figure 2) is preferable due to the capability of allowing uniform flow of fluids and of smoothly excluding ions by the electrodialysis effect. In the continuous electric regeneration type suppressor 10 shown in Figure 2, a transverse-mounted circular cylindrical container 15 is packed with an organic porous ion exchanger 11 and has a pair of ion exchange membranes 12a and 12b at both ends and, outside the ion exchange membranes, a pair of electrode chambers 14a and 14b equipped with electrodes 13a and 13b, respectively. As the ion exchange membranes 12a and 12b, membranes having a polarity that can permit permeating ions to be eliminated from the eluate from the separation column, but does not allow the objective ions to be analyzed to permeate, specifically, membranes having the same polarity as the packed organic porous ion exchanger 11, are used. For instance, when the objective ion to be analyzed is an anion and a sodium hydroxide aqueous solution is used as an eluant, an organic porous cation exchanger is packed in the suppressor and a pair of cation exchange membranes are arranged outside the cation exchanger. The cation exchange membrane discharges sodium ions that have been caught by the organic porous cation exchanger and have migrated to the cathode side due to the electrodialysis effect to the cathode chamber, and, on the anode side, prevents anions to be analyzed from migrating into the anode chamber and promotes the flow of anions into the detector. The regenerant, which is an acid or alkali, deionized water, or the waste solution discharged from the detector is circulated through the electrode chambers 14a and 14 b. As a result, ions in the effluent are caught by the organic porous cation exchanger and hydrogen gas or oxygen gas generated on the electrode by the electrolysis of water are discharged outside the suppressor. There are no specific limitations to the method of fluid circulation. A method of circulating fluid independently to each electrode and a method of circulating in series from one electrode chamber to the other electrode chamber, e.g. feeding to c and discharging from d, as shown in Figure 2, can be given. The electrode solution is preferably fed from the bottom to the top of the electrode chamber, because circulation in this direction ensures elimination of bubbles of hydrogen gas or oxygen gas and prevents noise generation in the detector due to migration of bubbles into the solution to be analyzed.

Any ion exchange membrane can be used in the continuous electric regenerative type suppressor without any specific limitations so long as the ion exchange membrane can allow selective permeation of either cation or anion and can separate the solution on both sides of the membrane. For example, a strongly acidic cation exchange membrane made from a fluororesin matrix into which sulfone groups are introduced, Nafion 117 and Nafion 350 (manufactured by E.I. du Pont de Nemours and Company), a strongly acidic cation exchange membrane made from a styrene-divinylbenzene copolymer matrix into which sulfone groups are introduced, and Neosepta CMX membrane (manufactured by Tokuyama Soda Co., Ltd.) can be used as a cation exchange membrane. As an anion exchange membrane, an anion exchange membrane made from a fluororesin matrix with anion exchange groups introduced therein, TOSFLEX IE-SATOSFLEX IE-DF, TOSFLEX IE-SF (manufactured by Tosoh Corp.), an anion exchange membrane made from a styrene-divinylbenzene copolymer matrix, and Neosepta AMH membrane (manufactured by Tokuyama Soda Co., Ltd.) can be given as examples.

In addition, in the case of the continuous electric regeneration type suppressor, it is possible to omit the ion exchange membrane if a dense layer that can play the same role as the ion exchange membrane is formed on both sides of the electrode surface of the organic porous ion exchanger. The dense layer herein indicates a layer at least without holes with a diameter of 10 nm or more in the same manner as with common ion exchange membranes. The thickness of the dense layer can be appropriately determined depending puon the use conditions without any specific limitations. The dense layer is coated on the polymer surface of the skeleton area of the organic porous ion exchanger and is integrally formed with the skeleton area polymer. The dense layer thus has a continuous structure with the organic porous ion exchanger. Therefore, the dense layer is formed from the same polymer as the polymer of the skeleton area. The dense layer can be observed comparatively easily in an SEM photograph.

As the electrode used for the continuous electric regeneration type suppressor, a conductive material such as a metal, an alloy, or a metal oxide; an electrode made by plating or coating on one of the metal, alloy, or metal oxide with the other metal, alloy, or metal oxide; and sintered carbon can be used. As the configuration of the electrode, a plate, a punching metal, a mesh, and the like can be given. In particular, as the anode, a material with excellent acid resistance and being oxidized only with difficulty such as Pt, Pd, Ir, $\beta$-$PbO_2$, or $NiFe_2O_4$, is preferably used. As the cathode, a material excelling in alkali resistance, such as Pt, Pd, and Au, carbon steel, stainless steel, Ag and Cu, graphite, or glassy carbon, is preferably used.

The electrode and the ion exchange membrane should preferably be in contact with each other to lower the voltage required during operation. In this instance, an ion exchange membrane having a fluororesin as a matrix should preferably be used for preventing deterioration of the ion exchange membrane due to oxidation. When an ion exchange membrane with a matrix other than a fluororesin is used, deterioration of the membrane due to oxidation can be prevented by inserting a nonconductor spacer such as a polyolefin mesh between the electrode and the ion exchange membrane. Insertion of the spacer is preferable even in the case of using an ion exchange membrane of a fluororesin matrix when the ion exchange membrane is an anion exchange membrane having an anion exchange group such as a quaternary ammonium group, since the anion exchange group is liable to be oxidized by an anode. Since the effluent discharged from the separation column at a certain point of time is prevented from being mixed with the effluent that has been discharged at an earlier point of time, the resolution capability can be improved by using the suppressor of the present invention.

There are no specific limitations to the type of the organic porous material used for the separation column, concentration column, and the suppressor. Examples include styrene-type polymers, polyolefins, poly(halogenated olefm), nitrile-type polymers, (meth)acrylic-type polymers, styrene-divinylbenzene copolymer, vinyl benzyl chloride-divinylbenzene copolymer, and the like. The polymer may be either a homopolymer or copolymer, or may be a polymer blend. Among these organic polymers, a styrene-divinylbenzene copolymer and a vinyl benzyl chloride-divinylbenzene copolymer are preferable in view of ease of introduction of ion exchange groups and high mechanical strength.

There are no specific limitations to the method of manufacturing the organic porous ion exchanger. A method described in Japanese Patent application Laid-open No. 2002-306976 may be used. Specifically, the process comprises preparing a water-in-oil type emulsion by mixing an oil-soluble monomer not containing an ion exchange group, a surfactant, water, and as required, a polymerization initiator, and polymerizing the water-in-oil type emulsion to obtain an organic porous material, and introducing ion exchange groups to the organic porous material. In this instance, the organic porous ion exchanger appropriate for the separation column, the concentration column, or the suppressor can be obtained by suitably selecting manufacturing conditions, for example, the type and amount of oil soluble monomer, surfactant, and polymerization initiator to be added; the amount of water to be added, stirring conditions such as stirring temperature and stirring speed during the preparation of W/O (water-in-oil) emulsion; polymerization conditions such as polymerization temperature and polymerization time; and the type and amount of ion exchange groups introduced.

As a mixing apparatus for forming the water-in-oil emulsion in the method of manufacturing the organic porous ion exchanger, a planet-type agitator can be used. The material to be processed is filled into a mixing container, which is held inclined and caused to move around a revolution axis while rotating, thereby mixing the material. This planet-type agitator is a type of apparatus disclosed in Japanese Patent Application Laid-open No. 6-71110 and Japanese Patent Application Laid-open No. 11-104404, for example. The principle of the apparatus is to cause a mixing vessel itself to rotate while causing it to rotate around a revolution axis, whereby heavier components (components having a greater specific gravity) in the processed material are shifted to the outside, utilizing centrifugal force, and, at the same time, bubbles mixed in the liquid are pushed in the reverse direction, thereby defoaming the material. In addition, since the vessel itself rotates while rotating around a revolution axis, spiral flows (whirling flows) are generated in the processed material in the vessel, whereby stirring action is promoted. Although the apparatus may be operated under atmospheric pressure, operation under reduced pressure is more preferable to completely defoam the material in a short period of time.

The mixing conditions such as rate of revolution, rate of rotation, and stirring time can be arbitrarily determined so that the target particle size and distribution of the emulsion can be attained. The desirable rate of revolution varies according to the size and shape of the vessel, but is usually about 500-2,000 revolutions/min. A desirable rate of rotation is about one third (1/3) the rate of revolution. Although the stirring time also significantly should vary according to the properties of the processed material, as well as shape and size of the vessel, usually a period of time in the range of 0.5 to 30 minutes, and preferably 1 to 20 minutes is applied. A vessel having a configuration allowing the processed material to be filled into the vessel so that the ratio of the bottom diameter and the height of the filled material becomes 1:0.5 to 1:5 is preferably used. The mixing ratio by weight of the above oil-soluble components and the water-soluble components can be arbitrarily determined in the range of 2:98 to 50:50, and preferably 5:95 to 30:70.

As the method for preparing the dense layer in the organic porous ion exchanger, a method of filling the w/o-type emulsion obtained by the above-described process in a vessel, of which at least a part in contact with the w/o-type emulsion is made from a hydrophobic material, is desiable. Preferably, after allowing the w/o-type emulsion to stand still in the vessel, a continuous membrane of the oil-soluble monomer is formed on the surface of the hydrophobic material. Then, the monomer is polymerized. The dense layer is thus formed on the vessel part in contact with the hydrophobic material.

The ion chromatographic instrument of the present invention comprises at least the concentration column and the separation column, and preferably the concentration column, the separation column, and the suppressor. In the above ion chromatographic instrument, it is preferable that the organic porous ion exchanger used in the separation column and the concentration column have the above-described characteristics, the radii of mesopores in the separation column be smaller than the radii of mesopores of the concentration column, and the ion exchange capacity of the organic porous ion exchanger packed in the separation column be smaller than the ion exchange capacity of the concentration column. When these requirements are satisfied, the ion chromatographic instrument can exhibit excellent separation performance and concentration performance, the separation column exhibits improved separation performance, and the analysis time can be reduced.

In the ion chromatographic instrument of the present invention, a guard column can optionally be installed before the separation column. The guard column is a small column optionally installed before the separation column to protect the separation column from damages due to foreign matters and the like and, when an emergency occurs, protects the separation column, while being damaged itself. When damaged, the guard column is replaced with another one. The guard column plays an ion separating role during normal operation like the separation column, and can be regarded as a part of the separation column. Therefore, the same organic porous ion exchanger used for the separation column can also be used for the guard column.

As the eluant, the same acid or alkali as that used in conventional ion chromatography can be used. For instance, when the separation column is packed with an organic porous anion exchanger, alkalis such as sodium bicarbonate, sodium carbonate, sodium hydroxide, and sodium tetraborate can be used either individually or in combination of two or more. When the separation column is packed with an organic porous cation exchanger, acids such as nitric acid, sulfuric acid, hydrochloric acid, and tartaric acid can be used either individually or in combination of two or more.

In general, in the ion chromatography apparatuses using a separation column packed with a conventional particulate ion exchanger, an acid or alkali at a concentration of mM order is selected as an eluant, whereas in the separation column packed with an organic porous ion exchanger having an ion exchange capacity of 0.5 mg-equivalent or more per gram of drying organic porous ion exchanger of the present invention, use of an acid or alkali at a concentration of about several tens of mM to 1 M as an eluant is preferable to shorten the elution time for the objective ions to be analyzed and to shorten the analysis time. In this instance, because the amount of ions to be excluded in the suppressor increases, it is desirable to use the continuous electric regeneration type suppressor of the present invention with excellent ion exclusion capability and to increase the current value in proportion to the amount of the ions to be excluded from the eluate.

A method known in the art can be applied to the quantitative analysis of ions in a sample using the ion chromatographic instrument of the present invention. Specifically, the same analytical method as the method of analysis using the ion chromatographic instrument shown in Figure 6 can be used, of which the detail description is omitted.

The present invention will be described in more detail by examples, which should not be construed as limiting the present invention.

(Preparation of organic porous material A)

Styrene (7.26 g), divinylbenzene (1.81 g), and sorbitan monooleate (3.89 g) were mixed and homogeneously dissolved. A water-in-oil type emulsion was obtained by adding the mixture of the styrene, divinylbenzene, and sorbitan monooleate to an aqueous solution of 0.24 g of potassium persulfate dissolved in 180 g of deionized water and agitating the resulting mixture using a planet-type agitator (Vacuum agitation defoaming mixer, manufactured by EME Co., Ltd.) under the following conditions of pressure: 13.3 kPa, ratio of bottom diameter to filling height: 1:1, revolution (rotation around a revolution axis): 1,800 rpm, rotation: 600 rpm, and agitating time: 5 minutes. After the emulsification, the reaction vessel was sufficiently replaced with nitrogen and was sealed. Then, the emulsion was allowed to stand still to polymerize at 60°C for 24 hours. After the polymerization, the reaction mixture was extracted with isopropanol for 18 hours using a Soxhlet extractor to remove the unreacted monomers, water, and sorbitan monooleate. The extract was dried overnight at 85°C under reduced pressure.

The inner structure of the organic porous material containing 14 mol% of a crosslinking component of the styrene/divinylbenzene copolymer thus obtained was inspected by SEM. The results are shown in Figure 3. As is clear from Figure 3, the organic porous material has a continuous porous structure and contains macropores and mesopores, respectively having a uniform size. In addition, the pore distribution curve of the organic porous material A measured by the mercury porosimetry method was sharp. The radius (R) of the peak top of the main peak of the pore distribution curve was 1.5 $\mu$m, the half-width (W) of the main peak was 0.6 $\mu$m, and the value (W/R) was 0.40. The total pore volume of the organic porous material A was 16 ml/g. To confirm the presence or absence of macrovoids, the organic porous material was cut and the inner conditions were observed by the naked eye. No macrovoids were observed at all.

(Preparation of organic porous cation exchanger A)

The organic porous material A was cut into pieces. Dichloroethane (800 ml) was added to the pieces (5.9 g) and the mixture was heated at 60°C for 30 minutes. After cooling to room temperature, chlorosulfuric acid (30.1 g) was slowly added and the mixture was reacted at room temperature for 24 hours. After the reaction, acetic acid was added and the mixture was poured into a large amount of water to wash with the water, thereby obtaining an organic porous cation exchanger A. The ion exchange capacity of the resulting organic porous cation exchanger A was 4.8 mg equivalent/g on a dry organic porous cation exchanger. The inner structure of the organic porous cation exchanger A contained continuous pores. As a result of measurement by the mercury porosimetry method using a dry sample, the radius (R) of the peak top of the main peak of the pore distribution curve was 1.5 $\mu$m, the half-width (W) of the main peak was 0.6 $\mu$m, and the value (W/R) was 0.40. The total pore volume was 16 ml/g.

Example 1

(Preparation of suppressor)

The organic porous cation exchanger A was cut into cylinders, each having an inner diameter of 3 mm, and packed in a cylindrical column to a packed layer length of 10 mm. Nafion 117 (manufactured by E. I. du Pont de Nemours and Company), a cation exchange membrane, was caused to adhere to both ends of an organic porous cation exchanger in the form of a transverse-mounted pillar, and electrodes made of a platinum mesh were arranged in contact with the ion-exchange membrane on both external ends. Then, a nozzle for the effluent from the separation column was provided to form a passage as shown in Figure 2 and piping to feed fluids to the electrode chamber was installed, to obtain a suppressor with a configuration shown in Figure 2.

(Preparation of organic porous material B)

An organic porous material B was produced in the same manner as in the method for preparing the organic porous material A, except for using 0.91 g of p-chloromethylstyrene and 6.35 g of styrene instead of 7.26 g of styrene. The resultant organic porous material B had a mesopore distribution as sharp as that of the organic porous material A. The radius (R) of the peak top of the main peak of the pore distribution curve was 1.7 µm, the half-width (W) of the main peak was 0.7 µm, and the value (W/R) was 0.41. The total pore volume of the organic porous material B was 16 ml/g.

(Preparation of organic porous anion exchanger B)

The organic porous material B was cut into pieces. Dioxane (800 ml) was added to the pieces (6.0 g) and the mixture was heated at 60°C for 30 minutes. After cooling to room temperature, dimethylamino ethanol (50 g) was slowly added and the mixture was reacted at 40°C for 24 hours. After the reaction, the reaction mixture was poured into a large amount of water. An organic porous anion exchanger was obtained by washing the product with water. The ion exchange capacity of the resultant organic porous anion exchanger B was 0.3 mg equivalent/g on a dry organic porous anion exchangers. The inner structure of the organic porous anion exchanger B contained continuous pores. As a result of measurement by the mercury porosimetry method using a dry sample, the radius (R) of the peak top of the main peak of the pore distribution curve was 1.7 µm, the half-width (W) of the main peak was 0.7 µm, and the value (W/R) was 0.41. The total pore volume was 16 ml/g.

(Preparation of organic porous material C)

An organic porous material C was prepared in the same manner as in the method of preparing the organic porous material A, except that a solution prepared by adding a homogeneous mixture of p-chloromethyl styrene (19.24 g), divinylbenzene (1.01 g), sorbitan monooleate (2.25 g), and azobisisobutyronitrile (0.26 g) to 180 g of deionized water was processed using a planet-type agitator (the vacuum agitation defoaming mixer). The resultant organic porous material C had a mesopore distribution as sharp as that of the organic porous material B. The radius (R) of the peak top of the main peak of the pore distribution curve was 4.6 µm.

(Preparation of organic porous ion exchanger C)

An organic porous ion exchanger C was prepared in the same manner as in the method applied to the preparation of the organic porous anion exchanger B, except for using the organic porous material C in place of the organic porous material B. The ion exchange capacity of the organic porous anion exchanger was 3.5 mg equivalent/g on a dry organic porous anion exchanger, and the radius (R) of the peak top of the main peak of the pore distribution curve measured by the mercury porosimetry method was 4.5 µm.

Example 2 (Preparation of separation column)

The organic porous anion exchanger B was cut into pieces and filled in a column with an internal diameter of 4.0 mm and a length of 150 mm. A 0.5 N aqueous solution of sodium hydroxide was caused to flow through the column at a flow rate of 1 ml/min for 20 minutes, followed by washing with deionized water at a flow rate of 1 ml/min for 30 minutes to convert the anion exchanger into an OH type. Then, a 1:1 mixture of 3.5 mM aqueous solution of sodium carbonate and 0.4 mM aqueous solution of sodium bicarbonate was caused to flow at a flow rate of 1.5 ml/min for 20 minutes to equilibrate the separation column. The equilibration was carried out in a thermostat at 35°C. The fluid flow pressure at the termination of the equilibration was 0.45 MPa.

Example 3 (Preparation of concentration column)

The organic porous anion exchanger C was cut into pieces and filled into a column with an internal diameter of 3.0 mm and a length of 10 mm. A 0.5 N aqueous solution of sodium hydroxide was caused to flow through the column at a flow rate of 1 ml/min for 10 minutes, followed by washing with deionized water at a flow rate of 1 ml/min for 20 minutes to convert the anion exchanger into an OH type. Then, a 1:1 mixture of 3.5 mM aqueous solution of sodium carbonate and 0.4 mM aqueous solution of sodium bicarbonate was caused to flow at a flow rate of 2 ml/min for 20 minutes to equilibrate the concentration column. The equilibration was carried out in a thermostat at 35°C. The fluid flow pressure at the termination of the equilibration was 0.05 MPa.

(Evaluation of concentration column)

The ion chromatographic instrument as shown in the Figure 6 was prepared in the following manner. The concentration column prepared in the above was used as a concentration column for the instrument. As a separation column, a column with an internal diameter of 4.0 mm and a length of 300 mm packed with a Pericurar-type anion exchanger made from styrene resin particles with a diameter of 9 µm as a matrix, of which the surface was covered with fine particles containing quaternary ammonium groups with a diameter of 0.14 µm, was used. The column had an ion exchange capacity of 62 µ equivalent/g on a dry organic porous anion exchanger. As a suppressor, two sheets of cation exchange membranes, each having a 10 mm x 100 mm rectangular effective liquid contact surface were arranged in parallel. The effluent from the separation column was circulated between the cation exchange membranes. Two electrodes, one anode and one cathode, were provided outside the cation exchange membranes, and a direct current of 50 mA was applied. Deionized water was circulated in the electrode to electrolyze the water. Produced hydrogen ions were used to regenerate the cation exchange membrane. The suppressor was thus a continuous electric regeneration type. The concentration column, the separation column, the suppressor, and the detector were installed in a thermostat, which was retained at 35°C.

(Concentration test using concentration column)

The sample solution was mixed with a commercially available standard solution for ion chromatography and diluted with deionized water to a prescribed concentration. The concentration of each ion in the sample solution was as follows: fluoride ion, 2.0 µg/l; chloride ion, 4.0 µg/l; nitrite ion, 5.0 µg/l; nitrate ion, 5.0 µg/l; phosphate ion, 10.0 µg/l; and sulfate ion, 10.0 µg/l. As an eluant, a 1:1 mixture of 2.7 mM sodium carbonate aqueous solution and an 0.3 mM sodium bicarbonate aqueous solution were used.

The sample solution was fed from the sample solution tank using a sample solution pump and caused to flow through the concentrator column from the separation column side (downstream side) to the upstream side at a flow rate of 2 ml/min for 10 minutes. Each of the above-described ions in the sample solution was concentrated by adsorbing on the organic porous anion exchanger packed in the concentrator column. In this instance, the eluant was fed from the eluant tank at a flow rate of 1.5 ml/min using an eluant pump to stabilize the operation of the separation column, suppressor, and detector with the eluant. In the suppressor, a direct current of 50 mA was applied to the electrodes and deionized water was caused to flow through the electrode chambers.

After the concentration, the sample solution pump was stopped, the valve was switched to feed the eluant at a rate of 1.5 ml/min from the upstream side of the concentration column and to cause the eluant to flow through the concentration column, separation column, suppressor, and detector. The ions adsorbed and concentrated in the concentration column was eluted by the eluant and developed in the separation column to separate the ions into individual ion components. After increasing the S/N ratio using the suppressor, the ions were quantitatively determined by the detector.

Next, an ion chromatographic instrument was prepared using a 25 µl quantitative tube instead of the concentration column, and the sample solution was supplied as is without concentraton. The sample solution was mixed with a commercially available standard solution for ion chromatography and diluted with deionized water to a prescribed concentration. The concentration of each ion in the sample solution was as follows: fluoride ion, 2,000 µg/l; chloride ion, 4,000 µg/l; nitrite ion, 5,000 µg/l; nitrate ion, 5,000 µg/l; phosphate ion, 10,000 µg/l; and sulfate ion, 10,000 µg/l. As an eluant, a 1:1 mixture of 2.7 mM sodium carbonate aqueous solution and an 0.3 mM sodium bicarbonate aqueous solution was used.

The sample solution was fed from the sample solution tank using the sample solution pump to the quantitative tube from the separation column side (downstream side) at a rate of 2 ml/min for five minutes. In this instance, the eluant was fed from the eluant tank at a flow rate of 1.5 ml/min using an eluant pump to stabilize the operation of the separation column, suppressor, and detector with the eluant. In the suppressor, a direct current of 50 mA was applied to the electrodes and deionized water was caused to flow through the electrode chambers.

After the concentration, the sample solution pump was stopped, the valve was switched to feed the eluant at a rate of 1.5 ml/min from the upstream side of the quantitative tube and to cause the eluant to flow through the concentration column, separation column, suppressor, and detector. The ions were eluted by the eluant and developed in the separation column to separate the ions into individual ion components. After increasing the S/N ratio using the suppressor, the ions were quantitatively determined by the detector.

The concentration efficiency of the concentration column was determined by comparing the amount of eluted ions when the concentration column was used with the amount of eluted ions when the concentration column was not used. The results are shown in Table 1.

The concentration efficiency of the concentration column was calculated using the following formula.

$$\text{Concentration efficiency} = \{(c \times d \times e)/(a \times b \times f)\} \times 100$$

wherein a is the concentration of ions ($\mu$g/l) in the sample solution when the concentration column was used; b is the concentration amount (ml); c is the peak area of the detection ion; d is the concentration of ions in the sample solution when quantitative tube was used ($\mu$g/l); e is the concentration amount (ml); and f is the peak area of the eluted ions.

In Example 3, b, which is the flow rate (2 ml/min) multiplied by the time (10 min), was 20 and e was 0.025 based on the volume of the quantitative tube (25 $\mu$l).

Comparative Example 1

An ion chromatographic instrument was prepared and the concentration test was carried out in the same manner as in Example 3, except that as the separation column, a column with an internal diameter of 3.0 mm and a length of 35 mm packed with a Pericurar-type anion exchanger made from styrene resin particles with a diameter of 30 $\mu$m as a matrix, of which the surface was covered with fine particles containing quaternary ammonium groups with a diameter of 0.25 $\mu$m, was used. The column had an ion exchange capacity of 3.5 $\mu$ equivalent. The results are shown in Table 1.

Table 1

| Concentration efficiency (%) | | |
|---|---|---|
| Ions | Example 3 | Comparative Example 1 |
| $F^-$ | 95 | 27 |
| $Cl^-$ | 100 | 42 |
| $NO_2^-$ | 100 | 56 |
| $NO_3^-$ | 96 | 87 |
| $PO_4^{3-}$ | 94 | 73 |
| $SO_4^{2-}$ | 100 | 100 |

The concentration column of Example 3 was demonstrated to exhibit a higher concentration efficiency as compared with the conventional concentration column of Comparative Example 1.

Example 4 (Preparation of ion chromatographic instrument)

The ion chromatographic instrument was prepared by connecting the concentrator column, separation column, and suppressor of Examples 1-3 in the manner shown in the Figure 6. The concentration column, the separation column, the suppressor, and the detector were installed in a thermostat, which was retained at 35°C.

(Quantitative analysis of ions using ion chromatographic instrument)

The sample solution was mixed with a commercially available standard solution for ion chromatography and diluted with deionized water to a prescribed concentration.
The concentration of each ion in the sample solution was as follows: fluoride ion, 1.25 $\mu$g/l; chloride ion, 2.5 $\mu$g/l; nitrite ion, 3.25 $\mu$g/l; bromide ion, 2.5 $\mu$g/l; nitrate ion, 7.5 $\mu$g/l; phosphate ion, 7.5 $\mu$g/l; and sulfate ion, 10 $\mu$g/l. As an eluant, a 1:1 mixture of 3.5 mM sodium carbonate aqueous solution and an 0.4 mM sodium bicarbonate aqueous solution was used.

The sample solution was fed from the sample solution tank using the sample solution pump and caused to flow through the concentrator column from the separation column side (downstream side) at a flow rate of 2 ml/min for five minutes. Each of the above-described ions in the sample solution was concentrated by adsorbing in the organic porous anion exchanger packed in the concentrator column. In this instance, the eluant was fed from the eluant tank at a flow rate of 1.5 ml/min using an eluant pump to stabilize the operation of the separation column, suppressor, and detector with the eluant. In the suppressor, a direct current of 50 mA was applied to the electrodes and deionized water was caused to flow through the electrode chambers.

After the concentration, the sample solution pump was stopped, the valve was switched to feed the eluant at a rate of 1.5 ml/min from the upstream side of the concentration column and to cause the eluant to flow through the concentration column, separation column, suppressor, and detector. The ions adsorbed and concentrated in the concentration column was eluted by the eluant and developed in the separation column to separate the ions into individual ion components. After increasing the S/N ratio using the suppressor, the ions were quantitatively determined by the detector. The resulting chromatogram is shown in Figure 4.

Comparative Example 2

The separation column used in Example 3 was used as a separation column, the concentration column used in Comparative Example 1 was used as a concentration column, and the suppressor used in Example 3 was used as a suppressor. An ion chromatographic instrument was prepared using the above-mentioned separation column, concentration column, and suppressor, and quantitative analysis of ions was carried out in the same manner as in Example 4 . When equilibrated at 35°C, the fluid pressure in the concentration column was 1.0 MPa at an eluant flow rate of 2 ml/min, and the fluid pressure in the separation column was 8.9 MPa at an eluant flow rate of 1.5 ml/min. The resultant chromatogram is shown in Figure 5.

The separation column and the concentration column used in the ion chromatographic instrument of Example 4 allowed fluid to flow at a lower pressure than the separation column and concentration column used in the ion chromatographic instrument of Comparative Example 2. The ion chromatographic instrument of Example 4 produced a chromatogram with sharp peaks and low noises as compared with those in the chromatogram obtained in Comparative Example 2. These results indicate that the separation column and concentration column of the present invention are effective as columns for ion chromatographic instruments to analyze low molecular ions and exhibit high resolution capability, and that the suppressor of the present invention can increase the S/N ratio without impairing the separation effect of the separation column. That is, the analytical value obtained using the ion chromatographic instrument of the present invention has high analysis accuracy.

The separation column and concentration column for ion chromatograph of the present invention exhibit high separation and concentration performance particularly for low molecule ions. Moreover, the suppressor of the present invention does not decrease the resolution capability when an eluate containing objective ions to be analyzed flowing out from the separation column passes through the suppressor. The ion chromatographic instrument of the present invention can decrease the fluid flow pressure without lowering the flow rate and exhibits excellent resolution capability.

**Claims**

1. A separation column for an ion chromatograph instrument packed with an organic porous ion exchanger having a three-dimensional structure, the organic porous ion exchanger having a continuous pore structure, which comprises macropores and mesopores, the macropores being interconnected forming mesopores with a radius of 0.01 to 50 μm in the interconnected parts, having a total pore volume of 1 to 50 ml/g, and having pore distribution curve characteristics wherein the value obtained by dividing the half-width of the pore distribution curve at the main peak by radius at the peak top of the main peak is 0.5 or less, the ion-exchange groups being introduced to achieve an ion exchange capacity of 0.1 to 5,000 μg equivalent/g dried organic porous exchanger.

2. A concentration column for an ion chromatographic instrument packed with an organic porous ion exchanger having a three-dimensional network structure, which has a continuous pore structure comprising macropores and mesopores, the macropores being interconnected forming mesopores with a radius of 0.01 to 100 μm in the interconnected parts and the organic porous ion exchanger having the ion exchange groups introduced therein to achieve an ion exchange capacity of 1.0 μg equivalent/g dried organic porous ion exchanger or more.

3. A suppressor for an ion chromatographic instrument packed with an organic porous ion exchanger having a three-dimensional network structure, which has a continuous pore structure comprising macropores and mesopores, the macropores being interconnected each other forming mesopores with a radius of 0.01 to 50 μm in the interconnected parts, having pore distribution curve characteristics wherein the value obtained by dividing the half-width of the pore distribution curve at the main peak by the radius at the peak top of the main peak is 0.5 or less, the organic porous ion exchanger having the ion exchange groups introduced therein to achieve an ion exchange capacity of 1.0 μg equivalent/g dried organic porous ion exchanger or more.

4. An ion chromatographic instrument comprising at least the separation column according to claim 1 and the concentration column according to claim 2, wherein the radius of mesopores of organic porous ion exchanger packed in the separation column is smaller than the radius of mesopores of organic porous ion exchanger packed in the concentration column.

Fig 1

Fig 2

Fig 3

Fig 4

elution time(minute).

Fig 5

Fig 6

# INTERNATIONAL SEARCH REPORT

| | International application No. |
|---|---|
| | PCT/JP2004/000766 |

**A. CLASSIFICATION OF SUBJECT MATTER**
Int.Cl$^7$ G01N30/48, G01N30/02

According to International Patent Classification (IPC) or to both national classification and IPC

**B. FIELDS SEARCHED**

Minimum documentation searched (classification system followed by classification symbols)
Int.Cl$^7$ G01N30/48, G01N30/02

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-296258 A (GL Science Inc.), 09 October, 2002 (09.10.02), (Family: none) | 1,4 |
| Y | JP 2000-501175 A (Amersham Pharmacia Biotech AB), 02 February, 2000 (02.02.00), & WO 97/19347 A & EP 862737 A & US 6290853 B | 1,2,4 |
| Y | JP 2002-328121 A (GL Science Inc.), 15 November, 2002 (15.11.02), & WO 02/25268 A & EP 1329714 A | 2,4 |
| Y | JP 2002-228645 A (Shimadzu Corp.), 14 August, 2002 (14.08.02), (Family: none) | 3 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 February, 2004 (24.02.04) | 09 March, 2004 (09.03.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP2004/000766

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2002-306976 A (Organo Corp.),<br>22 October, 2002 (22.10.02),<br>& WO 02/83771 A   & KR 2003016291 A<br>& US 2003/0189005 A | 3 |
| P,X | JP 2003-246809 A (Organo Corp.),<br>05 September, 2003 (05.09.03),<br>& EP 1321187 A   & US 2003/246809 A<br>& KR 2003053456 A | 1 |

Form PCT/ISA/210 (continuation of second sheet) (July 1998)